# EUROPÄISCHE PATENTSCHRIFT

(11) **EP 0 835 001 B1**
(45) Veröffentlichungstag und Bekanntmachung des Hinweises auf die Patenterteilung: **03.11.1999**
(21) Anmeldenummer: 97108287.0
(22) Anmeldetag: 22.05.1997
(51) Int. Cl.: H04B 10/145

(54) **Kanalzuweisungsverfahren bei der Datenübertragung im optischen Frequenzbereich**
Channel allocation method in data transmission in the optical frequency range
Méthode d'allocation de canaux en transmission de données à la plage de fréquences optiques

(30) Priorität: 05.10.1996 CH 241696
(43) Veröffentlichungstag der Anmeldung: 08.04.1998
(73) Patentinhaber: Oerlikon Contraves AG, 8050 Zürich (CH)
(72) Erfinder: Wandernoth, Bernhard, 9533 Kirchberg (CH); Fischer, Edgar, 8555 Müllheim Dorf (CH)
(74) Vertreter: Hotz, Klaus, Dipl.-El.-Ing./ETH Patentanwalt

(56) Entgegenhaltungen:
- DE-A- 4 422 977
- GB-A- 2 250 394
- GUY M ET AL: "SIMULTANEOUS ABSOLUTE FREQUENCY CONTROL OF LASER TRANSMITTERS IN BOTH 1.3 AND 1.55 MUM BANDS FOR MULTIWAVELENGTH COMMUNICATION SYSTEMS" JOURNAL OF LIGHTWAVE TECHNOLOGY, Bd. 14, Nr. 6, 1.Juni 1996, Seiten 1136-1143, XP000598519
- SAITOH T ET AL: "PROPOSAL OF A MULTIPLEX OPTICAL FREQUENCY COMB GENERATION SYSTEM" IEEE PHOTONICS TECHNOLOGY LETTERS, Bd. 8, Nr. 2, 1.Februar 1996, Seiten 287-289, XP000551543
- KONING O J ET AL: "REFERENCE FREQUENCY-COMB FOR MULTI-CHANNEL STABILIZATION BY MODE-LOCKING OF A SEMICONDUCTOR LASER" PROCEEDINGS OF THE EUROPEAN CONFERENCE ON OPTICAL COMMUNICATION (EC, AMSTERDAM, SEPT. 16 - 20, 1990 REGULAR PAPERS, Bd. 1, 16.September 1990, PTT NEDERLAND AND PHILIPS RESEARCH LABORATORIES, Seiten 539-542, XP000449230

## Beschreibung

Die vorliegende Erfindung beinhaltet ein Verfahren zur Errichtung eines Kanalrasters für optische Übertragungskanäle nach dem Oberbegriff des Patentanspruchs **1**.
In der Funktechnik bedient man sich zur Erleichterung des Verbindungsaufbaus und zur optimalen Nutzung der zur Verfügung stehenden Übertragungsbandbreite eines fest vereinbarten Rasters von Frequenzen. Die daraus entstandenen Übertragungskanäle weisen der Modulationsart und der Übertragungsbandbreite angepasste Kanalbandbreiten auf, die meistens noch eine Sicherheitsreserve aufweisen, um Störungen durch den Nachbarkanal aufgrund von z.B. nicht perfekten Filtern zu vermeiden. Die Kanäle können dauerhaft durch lediglich einen Sender und viele wechselnde Empfänger genutzt werden, oder auch verschiedenen Sendern flexibel zugeteilt werden.
In der optischen Nachrichtentechnik finden sich die bekannten Zugriffsverfahren zur Mehrfachausnutzung eines Übertragungspfades wieder, wie z.B. Frequenz- und Zeitmultiplexverfahren.
Insbesondere Frequenzmultiplexverfahren sind auf verschiedenste Weise implementierbar. So besteht die Möglichkeit, mehrere optische Frequenzbereiche bzw. Wellenlängen auf einem Übertragungspfad zusammenzuführen, indem die Emission verschiedener Sender auf verschiedenen Wellenlängen vor ihrer Detektion in verschiedenen Empfängern durch optische Filter getrennt werden.
Weiterhin kann das zu detektierende Signallicht zusammen mit der Emission einer unmodulierten quasi monochromatischen Strahlquelle auf einen Photodetektor geführt werden. Da optische Leistung in einem Photodetektor in elektrischen Strom umgesetzt wird, die dadurch entstehende elektrische Leistung also proportional zum Quadrat der optischen Leistung ist, entsteht bei der Detektion zweier optischer Frequenzen ein Wechselstrom auf der Differenzfrequenz beider optischen Wellen. Somit kann statt aufwendiger optischer Filter die hohe Selektivität elektrischer Filter zur Abtrennung eines gewünschten Signals genutzt werden.
Letztlich existiert noch die Möglichkeit, zwei optische Wellen mit gleicher Frequenz auf einem Photodetektor zu überlagern, wobei die Höhe des Photostroms in Abhängigkeit von der Phasenbeziehung zwischen den Lichtwellen bestimmt wird.
Dieses Verfahren stellt hinsichtlich der Detektionsempfindlichkeit eines der leistungsfähigsten dar. Allerdings erwächst hierbei auch das Bedürfnis nach genau vereinbarten optischen Frequenzen, um die Aufnahme und Durchführung der Verbindung zu erleichtern. Für sogenannte Dense Wavelength Multiplex-Systeme existieren Lösungsvorschläge für dieses Problem, die sich scharfe und im optischen Frequenzbereich weniger dicht auftretende Absorptionsstellen bestimmter Moleküle zunutze machen (M. Guy. et al., Simultaneous Absolute Frequency Control of Laser Transmitters in both 1.3 and 1.55 mum Bands for Multiwavelength Communication Systems, IEEE JLT Vol. 14, No. 6, June 1996, p. 1136-1143).
Weiterhin wird beschrieben, wie durch die periodische Übertragungsfunktion eines Michelson-lnterferometers ein Raster optischer Referenzfrequenzen geschaffen werden kann. Diese können zur Einstellung der optischen Frequenz der im Übertragungssystem genutzten Laser verwendet werden. Je nach Lasertyp, wie z.B. einer Laserdiode oder laserdiodengepumpten Festkörperlasern, kann der Abgleich auf eine Rasterfrequenz durch Variation des Injektionsstroms oder der Temperatur des Lasers vollzogen werden. Nachteilig wirkt sich bei diesem Verfahren insbesondere für Raumfahrtanwendungen die Komplexität und das Gewicht der benötigten Apparatur zur Bereitstellung eines solchen Frequenzrasters aus.
Für optische Freiraumverbindungen bieten sich wegen ihrer vergleichbar hohen Ausgangsleistung und ihres geringen Gewichts diodengepumpte Festkörperlaser an, z.B. Miniatur Nd-YAG-Ringlaser, die sich durch Veränderung der Kristalltemperatur um 50 GHz und mehr in ihrer optischen Frequenz verstimmen lassen (siehe auch: W. Koechner, Solid State Laser Engineering, Springer, Heidelberg, 1995). Durch die Veränderung der Kristalltemperatur und der daraus resultierenden Längenänderung findet eine Änderung der Frequenz des angeschwungenen Resonatormodes statt. Schliesslich aber wird ein in der optischen Frequenz benachbarter Mode anschwingen, daher treten bei dieser Abstimmungsmethode reproduzierbare Unstetigkeiten der optischen Frequenz auf.
Die Wiederholbarkeit der Einstellung einer bestimmten Emissionsfrequenz ist bei besagten Nd-YAG-Lasern in erster Linie durch die Temperaturregelung des Laserkristalls bestimmt. Wiederholbarkeiten innerhalb eines Frequenzbereichs von ± 300 MHz bei einer Emissionsfrequenz von 281 THz werden von kommerziell erhältlichen Geräten erreicht. Die Verwendung der kohärenten Technik bei optischen Freiraumverbindungen ist sehr vorteilhaft, was sich dadurch begründen lässt, dass keine schmalbandigen optischen Filter benötigt werden, um zur Verbesserung des Signal- zu Rauschleistungsverhältnisses das im freien Raum normalerweise vorhandene Fremdlicht vom Detektor fernzuhalten. Die hohe Frequenzselektivität kohärenter Detektion ist einzig durch die Wechselwirkung zwischen überlagerndem und empfangenem Licht im Photodetektor zurückzuführen.
Dadurch, dass beim Überlagerungsempfang die realen Photodetektoren nahe an der Schrotrauschgrenze betrieben werden, hat Hintergrundlicht bis zu einem Leistungsanteil von mehreren Prozent des überlagernden Lichts nur einen marginalen Einfluss auf den Rauschabstand des detektierten Signals. Durch den Wegfall schmalbandiger optischer Filter besitzt die kohärente Übertragungstechnik den zusätztlichen Vorteil, die zur Übertragung benutzte optische Frequenz in weiten Grenzen frei wählbar zu halten. Sicherzustellen ist lediglich, dass die optische Mittenfrequenz des Signallichts mit der Frequenz des überlagernden Lichts genau übereinstimmt.

Die Aufgabe der im folgenden beschriebenen Erfindung wird nun darin gesehen, unter Vermeidung der Nachteile, die bei Verfahren nach dem Stand der Technik auftreten, ein einfaches Verfahren zu schaffen, welches mit geringem technischen Aufwand die Einhaltung eines optischen Frequenzrasters gewährleistet.

Diese Aufgabe wird erfindungsgemäss durch die Merkmale des kennzeichnenden Teils des Patentanspruch **1** gelöst.
Weitere Einzelheiten, Merkmale und Vorteile der Erfindung ergeben sich nicht nur aus den Ansprüchen und diesen zu entnehmenden Merkmalen -für sich und/oder in Kombination-, sondern auch aus der nachfolgenden Beschreibung eines bevorzugten Ausführungsbeispiels und der Zeichnung.

Es zeigen:
- **Fig. 1**: Eine typische thermische Abstimmungskurve eines Nd:YAG Miniatur-Ringlasers.
- **Fig. 2**: Ein Blockdiagramm eines Frequenzmanagementkonzepts für die kohärente Kommunikation in einem Satellitennetzwerk.

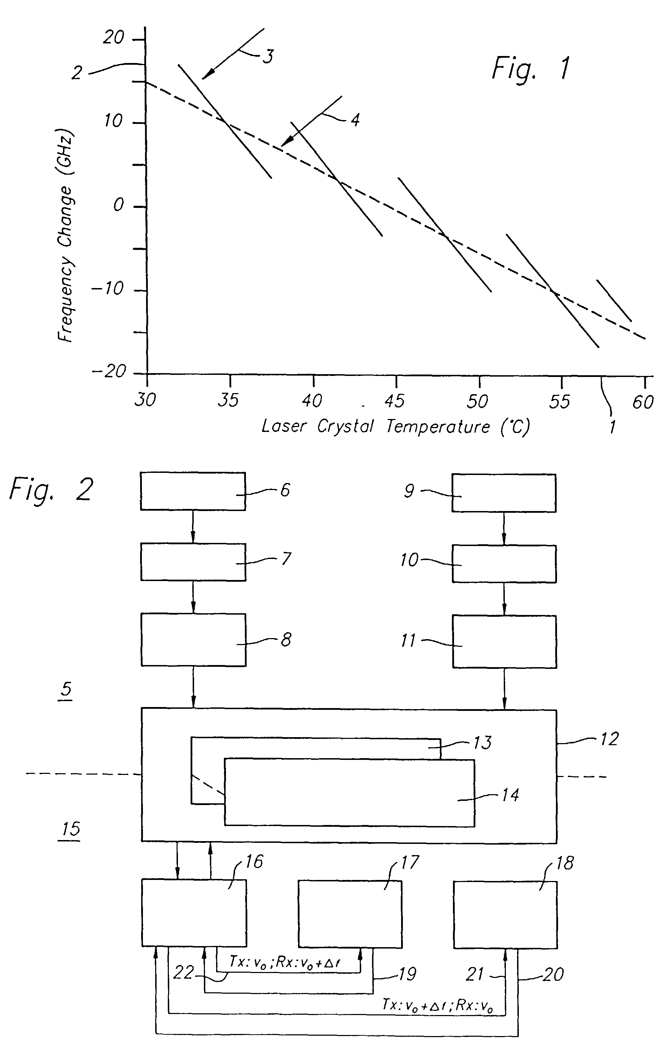

In **Fig. 1** ist die typische thermische Abstimmungskurve eines Nd:YAG-Miniatur-Ringlasers dargestellt, wobei eine Schar durchgezogener Linien **3** diejenigen Bereiche kennzeichnet, in denen durch kontinuierliche Änderung einer in Grad Celsius angeschriebenen Temperatur **1** des Kristalls des Ringlasers eine kontinuierliche Änderung der in Gigahertz skalierten optischen Frequenz **2** erfolgt. Zwischen den durchgezogenen Bereichslinien **3** existieren Bereiche, in denen keine eindeutige Oszillation des Lasers möglich ist. Innerhalb eines kontinuierlich durchstimmbaren Bereichs ändert sich in diesem Ausführungsbeispiel die optische Frequenz des Lasers mit etwa 2.4 GHz/°C. Eine strichlierte Linie zeigt den Verlauf der mittleren optischen Frequenz **4** bei Durchstimmung eines grösseren Bereichs. Die mittlere Änderung der optischen Frequenz beträgt hierbei 1 GHz/°C.
Ein Problem besteht nun in den unterschiedlichen thermischen Abstimmungskurven zweier Laser gleicher Bauart, dadurch bedingt, dass das Kristall des Lasers, welches auch den Resonator beinhaltet, nicht mit einer Präzision zu fertigen ist, die vollständige Übereinstimmung der Abstimmungskurven erwarten lässt. Folglich kann das Licht des Sende-Lasers eine optische Frequenz aufweisen, auf welcher der das überlagernde Licht erzeugende Laser nicht schwingen kann. Dies wiederum heisst, dass vor Verbindungsaufnahme die sendende Station Informationen über gemeinsam nutzbare optische Frequenzen benötigt.
Anhand von **Fig. 2** kann dargelegt werden, wie während einer Vorbereitungsphase **5** Information über einen Sende-Laser **6** und einen Lokaloszillator-Laser **9** in einem gemeinsamen Terminal-Daten-Archiv **12** abgelegt und in einer Nutzungsphase **15** das Zusammenwirken von einem ersten Terminals **17** mit einem zweiten (n-ten) Terminal **18** beeinflussen.
Zunächst werden sowohl der Sende-Laser **6** mit einem ersten Identifikationscode **7** als auch der Lokaloszillator-Laser **9** mit einem zweiten Identifikationscode **10** versehen. Anschliessend wird bei beiden Lasern, dem Sende-Laser **6** und dem Lokaloszillator-Laser **9**, eine Bestimmung der jeweiligen Durchstimmcharakteristik **8** und **11** nach **Fig. 1** vorgenommen. Die daraus gewonnenen Datensätze werden innerhalb eines Terminal-Daten-Archivs **12** in für die einzelnen Laser vorgesehenen ersten Laser-Kennzahlen-Archiv **13** und zweiten Laser-Kennzahlen-Archiv **14** abgelegt. Mit Beginn der Nutzungsphase **15** greift eine Netzwerk-Management-Einheit **16** auf das Terminal-Daten-Archiv **12** zu, um in Verbindung mit dem ersten Terminal **17** und dem zweiten Terminal **18** die zu deren Steuerung nötigen Daten zu erhalten. Die Netzwerk-Management-Einheit **16** erwirkt in dem ersten Terminal **17** und dem zweiten Terminal **18** anhand der aus dem Archiv **12** geladenen Durchstimmcharakteristiken **8** und **11** eine Einstellung von optischen Sende- und Empfangsfrequenzen **21** und **22,** weiterhin werden von der Netzwerk-Management-Einheit **16** Aktualisierungensätze **19** bis **20** der Durchstimmcharakteristiken **8** und **11** während des Betriebs des ersten Terminals **17** und des zweiten Terminals **18** vorgenommen und in das Terminal-Daten-Archiv **12** geschrieben.
Das Terminal-Daten-Archiv **12** sowie die Netzwerk-Management-Einheit **16** befinden sich bei einem Satelliten-Netzwerk in einer Bodenstation, die Befehle (Zuteilung der optischen Sende- und Empfangsfrequenzen) **21** bis **22** sowie die Abfragen **19** bis **20** werden über einen Funkkanal (Telekommando/Telemetric) zu den einzelnen Satelliten abgewickelt.

Vor dem Aufbau einer zeitlich beschränkten Verbindung zwischen zwei beliebigen Stationen eines Netzes werden durch die Netzwerk-Management-Einheit **16** im Terminal- Daten-Archiv **12** anhand des ersten Identifikationscodes **7** und des zweiten Identifikationscodes **10** des entsprechenden Sende-Lasers **6** bzw. Lokaloszillator-Lasers **9** die entsprechenden Laser Archive **13** und **14** geöffnet und die (aktuellen) Durchstimmcharakteristiken **8** und **11** der Laser abgefragt. Daraufhin wird ein durch beide Laser benutzbarer Kanal im optischen Frequenzbereich festgelegt. Zunächst erfolgt nun bei einer optischen Freiraumverbindung die gegenseitige räumliche Akquisition beider Terminals **17** und **18**, danach findet die Akquisition der optischen Frequenz durch Kontrolle des Lokaloszillator-Lasers **9** statt. Die vorherige Vereinbarung eines festen Kanalrasters bedeutet hierbei eine wesentliche Beschleunigung.
Ist die Open-Loop-Steuerung des Lokaloszillator-Lasers **9** zu ungenau, so erzeugen geringere Abweichungen der optischen Frequenz des Lokaloszillator-Lasers **9** von der des Sender-Lasers **6** im Detektor einen Wechselstrom mit der Differenzfrequenz, die als Eingangsgrösse für einen Regler verwendet werden kann. Wird die elektrische Bandbreite des Photodetektors und nachfolgender Baugruppen durch diese Differenzfrequenz überschritten, muss der Lokaloszillator-Laser **9** in einem Suchlauf durchgestimmt werden, bis eine detektierbare Differenzfrequenz vorhanden ist.

Oftmals werden die Übertragungsstrecken in optischen Freiraumverbindungen bidirektional genutzt. Kohärente Übertragungssysteme zeichnen sich dadurch aus, dass Hintergrundlicht bis zu einem Leistungsanteil von mehreren Prozent des überlagernden Lokaloszillatorlichts nur einen vernachlässigbaren Einfluss auf den Rauschabstand des detektierten Signals hat. Wird in einer bidirektionalen optischen Verbindung teilweise dieselbe Optik für beide Wege genutzt, so muss mit der Rückstreuung eines gewissen Teils des eigenen Sendelichts in den Empfänger des Terminals gerechnet werden. Übersteigt allerdings der Unterschied der optischen Frequenzen von gesendetem und empfangenen Licht die Bandbreite des im Empfänger eingesetzten Detektors bzw. nachgeschalteter Filter, ist der Einfluss rückgestreuten Senderlichts ebenfalls vernachlässigbar. Das zurückgestreute Sendelicht wechselwirkt zwar mit dem Lokaloszillatorlicht, jedoch infolge der integrierenden Wirkung des Photodetektors wird dieses Signal lediglich als Gleichlicht registriert werden.
Es ist also ein Kanalraster zu errichten, in dem der gegenseitige Abstand zweier benachbarter Kanäle die Detektionsbandbreite des optischen Empfängers übersteigt.

Als weiterer Vorteil des erfindungsgemässen Verfahrens ist zu festzustellen, dass jedes Terminal gleicher Bauart mit jedem anderen eine Verbindung aufbauen kann, im Gegensatz zum Stand der Technik, wo in bestehenden Systemen jeweils ein Sender-Laser und ein Lokal-Oszillator-Laser aufeinander abgeglichen sein müssen, ohne dass später die Möglichkeit von Anpassungen besteht.

## Patentansprüche

1. Verfahren zur Errichtung eines Kanalrasters für optische Übertragungskanäle, welche für eine optische Kommunikation zwischen zwei beliebigen Stationen, insbesondere einem ersten Satelliten-Terminal (**17**) mit einer Sendeeinheit und einem zweiten Satelliten-Terminal (**18**) mit einer Empfangseinheit, vorgesehen sind,
**dadurch gekennzeichnet, dass**
- dass jede Sendeeinheit wenigstens einen Sende-Laser (**6**) und jede Empfangseinheit wenigstens einen Lokaloszillator-Laser (**9**) aufweist,
- dass während einer Vorbereitungsphase der Sende-Laser (**6**) mit einem ersten Identifikationscode (**7**) und der Lokaloszillator-Laser (**9**) mit einem zweiten Identifikationscode (**10**) versehen und eine erste, dem Sende-Laser (**6**) zugehörige, Durchstimmcharakteristik (**8**) und eine zweite, dem Lokaloszillator-Laser (**9**) zugehörige, Durchstimmcharakteristik (**11**) als Kenndaten der Sendeeinheit bzw. der Empfangseinheit der Satelliten-Terminals (**17, 18**) gespeichert werden, und
- dass während einer zeitlich beschränkten Nutzungsphase, vor dem Beginn der Kommunikation zwischen den Stationen, zum Aufbau der Kommunikation anhand des ersten Identifikationscodes (**7**) und des zweiten Identifikationscodes (**10**) die Durchstimmcharakteristiken (**8, 11**) des Sende-Lasers (**6**) und des Lokaloszillator-Lasers (**9**) abgefragt und ein durch den Sende-Laser (**6**) und den Lokaloszillator-Laser (**9**) benutzbarer Übertragungskanal im optischen Frequenzbereich für den Kanalraster festgelegt wird.

2. Verfahren nach Anspruch 1,
**dadurch gekennzeichnet, dass**
die Kenndaten in einem Terminal-Datenarchiv (**12**) der Satelliten-Terminals (**17, 18**) gespeichert werden.

3. Verfahren nach einem der vorangehenden Ansprüche,
**dadurch gekennzeichnet, dass**
für die Nutzungsphase (15) eine mit mehreren Satelliten-Terminals (**17, 18**) kommunizierfähige Netzwerk-Management-Einheit (**16**) vorgesehen ist.

4. Verfahren nach Anspruch 3,
**dadurch gekennzeichnet, dass**
die Netzwerk-Management-Einheit (**16**) Mittel aufweist, die mittels einer ersten Abfrage (**21**) und einer zweiten Abfrage (**22**) bewirken, dass die gespeicherten Kenndaten der Sende- und Empfangseinheiten der Satelliten-Terminals (**17, 18**) durch einen ersten Aktualisierungssatz (**19**) und einen zweiten Aktualisierungssatz (**20**) mit aktuellen Daten überschrieben werden.

5. Verfahren nach mindestens einem der Ansprüche 3 bis 4,
**dadurch gekennzeichnet, dass**
die Netzwerk-Management-Einheit (**16**) als Bodenstation ausgebildet ist und über Funkkontakt mit den Satelliten-Terminals (**17, 18**) kommuniziert.

6. Verfahren nach einem der Ansprüche 3 bis 5,
**dadurch gekennzeichnet, dass**
das Terminal-Archiv (**12**) ein erstes Laser-Kenndaten-Archiv (**13**) für die Kenndaten-Speicherung des Sende-Lasers (**6**) und ein zweites Laser-Kenndaten-Archiv (**14**) für die Kenndaten Speicherung des Lokaloszillator-Lasers (**9**) aufweist.

7. Verfahren nach einem der vorangehenden Ansprüche,
**dadurch gekennzeichnet, dass**
zwischen den Sende- und Empfangseinheiten der Satelliten-Terminals (**17, 18**) unter Einbezug der relevanten Kenndaten ein festes Kanalraster vereinbart wird.

## Claims

1. Method for setting up a channel pattern for optical transmission channels which are provided for optical communication between any two desired stations, in particular a first satellite terminal (17) with a transmitting unit and a second satellite terminal (18) with a receiving unit,
**characterised in that**
- each transmitting unit has at least one transmitting laser (6) and each receiving unit has at least one local oscillator laser (9),
- during a preparatory phase the transmitting laser (6) is given a first identification code (7) and the local oscillator laser (9) a second identification code (10), and a first tuning characteristic (8) associated with the transmitting laser (6), and a second tuning characteristic (11) associated with the local oscillator laser (9), are stored as characteristics respectively of the transmitting unit and receiving unit of the satellite terminals (17, 18), and
- during a temporally limited utilisation phase, prior to the start of communication between the stations, the tuning characteristics (8, 11) of the transmitting laser (6) and of the local oscillator laser (9) are interrogated to establish communication with the help of the first identification code (7) and of the second identification code (10), and a transmission channel usable by the transmitting laser (6) and the local oscillator laser (9) is fixed for the channel pattern in the optical frequency range.

2. Method according to claim 1,
**characterised in that**
the characteristics are stored in a terminal data archive (12) of the satellite terminals (17, 18).

3. Method according to either of the preceding claims,
**characterised in that**
for the utilisation phase (15) a network management unit (16) capable of communicating with a plurality of satellite terminals (17, 18) is provided.

4. Method according to claim 3,
**characterised in that**
the network management unit (16) has means which by means of a first interrogation (21) and a second interrogation (22) cause the stored characteristics of the transmitting and receiving units of the satellite terminals (17, 18) to be overwritten with current data by a first updating record (19) and a second updating record (20).

5. Method according to at least one of claims 3 and 4,
**characterised in that**
the network management unit (16) is in the form of a ground station and communicates with the satellite terminals (17, 18) via radio contact.

6. Method according to any of claims 3 to 5,
**characterised in that**
the terminal archive (12) has a first laser characteristics archive (13) for storing the characteristics of the transmitting laser (6) and a second laser characteristics archive (14) for storing the characteristics of the local oscillator laser (9).

7. Method according to any of the preceding claims,
**characterised in that**
between the transmitting and receiving units of the satellite terminals (17, 18) a permanent channel pattern that takes account of the relevant characteristics is agreed.

## Revendications

1. Procédé d'établissement d'une grille d'allocation de canaux pour des canaux de transmission optique, qui sont prévus pour une communication optique entre deux stations quelconques, en particulier un premier terminal de satellite (17) avec une unité d'émission et un second terminal de satellite (8) avec une unité de réception, caractérisé en ce que :
- chaque unité d'émission présente au moins un laser émetteur (6) et chaque unité de réception au moins un laser à oscillateur local (9),
- au cours d'une phase de préparation, le laser émetteur (6) est pourvu d'un premier code d'identification, (7) et le laser à oscillateur local (9) d'un deuxième code d'identification et une première caractéristique d'accord ressortissant au laser émetteur (6) et une seconde caractéristique d'accord ressortissant au laser à oscillateur local (9) sont enregistrées comme données caractéristiques de l'unité d'émission ou de l'unité de réception des terminaux de satellites (17, 18), et
- au cours d'une phase d'exploitation limitée dans le temps, avant le début de la communication entre les stations, pour établir la communication sur la base du premier code d'identification (7) et du deuxième code d'identification (10), les caractéristiques d'accord (8, 11) du laser émetteur (6) et du laser à oscillateur local (9) sont interrogées et un canal de transmission utilisable par le laser émetteur (6) et le laser à oscillateur local (9) est établi dans la plage de fréquences optiques pour la grille d'allocation de canaux.

2. Procédé selon la revendication 1, caractérisé en ce que les données caractéristiques sont enregistrées dans une archive de données de terminal (12) des terminaux de satellites (17, 18).

3. Procédé selon l'une quelconque des revendications précédentes, caractérisé en ce que, pour la phase d'exploitation (15), il est prévu une unité de gestion de réseau (16) qui peut communiquer avec plusieurs terminaux de satellites (17, 18).

4. Procédé selon la revendication 3, caractérisé en ce que l'unité de gestion de réseau (16) présente des moyens qui font que, au moyen d'une première interrogation (21) et d'une deuxième interrogation (22), les données caractéristiques enregistrées dés unités d'émission et de réception des terminaux de satellites (17, 18) sont écrasées par un premier mot d'actualisation (19) et un deuxième mot d'actualisation (20) avec des données courantes.

5. Procédé selon au moins l'une quelconque des revendications 3 à 4, caractérisé en ce que l'unité de gestion de réseau (16) se présente sous la forme d'une station terrestre et est en communication avec les terminaux de satellites (17, 18) par contact radio.

6. Procédé selon l'une quelconque des revendications 3 à 5, caractérisé en ce que l'archive de terminal (12) présente une première archive de données caractéristiques de laser (13) pour l'enregistrement des données caractéristiques du laser émetteur (6) et une deuxième archive de données caractéristiques de laser (14) pour l'enregistrement de données caractéristiques du laser à oscillateur local (9).

7. Procédé selon l'une quelconque des revendications précédentes, caractérisé en ce qu'entre les unités d'émission et de réception des terminaux de satellites (17, 18), une grille fixe d'allocation de canaux est spécifiée par intégration des données caractéristiques correspondantes.
